# EUROPÄISCHE PATENTSCHRIFT

(11) **EP 1 757 832 B1**
(45) Veröffentlichungstag und Bekanntmachung des Hinweises auf die Patenterteilung: **13.06.2018**
(21) Anmeldenummer: 06016177.5
(22) Anmeldetag: 03.08.2006
(51) Int. Cl.: F16D 35/02

(54) **Kegelrollenlagerung einer Flüssigkeitsreibkupplung**
Tapered roller bearing of a viscous fluid clutch
Roulement à rouleaux coniques d'un embrayage à fluide visqueux

(30) Priorität: 10.08.2005 DE 102005038060
(43) Veröffentlichungstag der Anmeldung: 28.02.2007
(73) Patentinhaber: AB SKF, 415 50 Göteborg (SE); MAHLE Behr GmbH & Co. KG, 70469 Stuttgart (DE)
(72) Erfinder: Stubenrauch, Arno, 97491 Aidhausen (DE); Ruple, Jürgen, 76316 Malsch (DE)
(74) Vertreter: Grauel, Andreas

(56) Entgegenhaltungen:
- EP-A1- 1 391 624
- WO-A-01/14759
- GB-A- 2 354 562

## Beschreibung

Die Erfindung betrifft eine Lagerung einer Flüssigkeitsreibkupplung, insbesondere für einen Kraftfahrzeuglüfter. Siehe als Stand der Technik, EP1391624, GB2354562, und WO01/14759. Beispielsweise aus der DE 103 38 432 A1 ist eine Flüssigkeitsreibkupplung, insbesondere für einen Kraftfahrzeuglüfter bekannt, umfassend eine drehbar gelagerte Welle, einen auf der Welle drehfest gelagerten Antriebskörper, einen auf der Welle drehbar gelagerten, den Antriebskörper zumindest teilweise umschließenden Abtriebskörper und einen zwischen den Körpern angeordneten, ein viskoses Fluid aufnehmenden Kupplungsbereich, durch welchen die Körper zur Übertragung eines Drehmoments koppelbar sind. Dabei ist der Abtriebskörper über ein zweireihiges Schrägkugellager auf der Welle drehbar gelagert.
Eine Aufgabe der Erfindung ist es, eine verbesserte Lagerung einer Flüssigkeitsreibkupplung, insbesondere für einen Kraftfahrzeuglüfter zu schaffen, so dass mit der verbesserten Lagerung insbesondere lange Lebensdauern erzielbar sind.

Die Aufgabe wird durch den Gegenstand des Anspruchs 1 gelöst. Vorteilhafte Ausgestaltungen sind in den Unteransprüchen beschrieben.

Ausgehend von dem eingangs beschriebenen Stand der Technik beruht die Erfindung insbesondere auf der Erkenntnis, dass unter anderem in Verbindungen mit längeren Lüfterlaufzeiten und/oder größeren Lüfterleistungen die Lagerung besagten Abtriebskörpers auf der Welle problematisch ist und zu einem vorzeitigen Ausfall des Lüfters führen kann. Dadurch, dass nunmehr anstelle des zweireihigen Schrägkugellagers ein zweireihiges Kegelrollenlager eingesetzt ist, wird unter anderem die Steifigkeit der Gesamtanordnung entsprechend verbessert, so dass eine größere Unempfindlichkeit hinsichtlich auftretender Schwingungen erzielt wird und somit die Lebensdauer der Lagerung im besagten Einsatzfall deutlich erhöht ist. In einer vorteilhaften Ausgestaltung kommen dabei speziell entwickelter Sonderschmierfette für Wälzlager der Firma Fuchs im Kegelrollenlager zum Einsatz. In einer besonders vorteilhaften Ausgestaltung ist dabei das Kegelrollenlager mit einem gemeinsamen Lageraußenring für die beiden Kegelrollenreihen und in O-Anordnung ausgebildet.

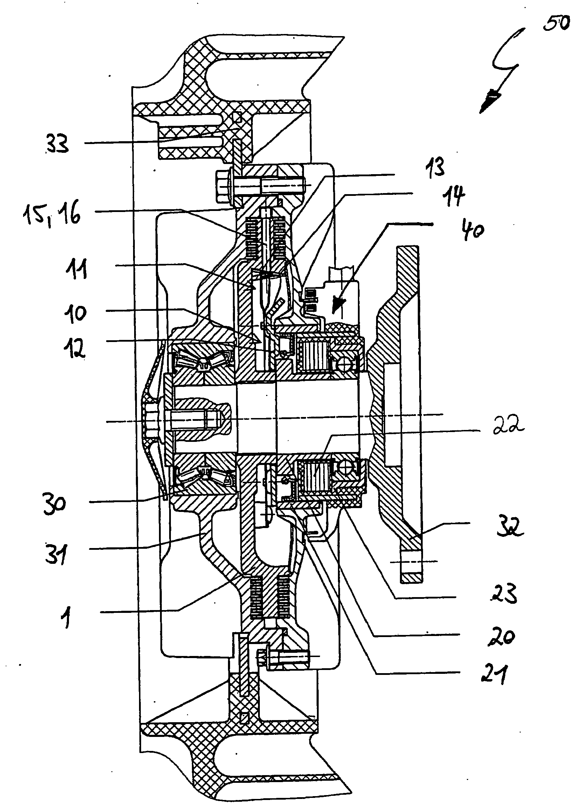

Weitere Vorteile, Merkmale und Einzelheiten der Erfindung ergeben sich aus dem im folgenden beschriebenen Ausführungsbeispiel der Erfindung anhand der Figur.

Die Figur zeigt als ein Ausführungsbeispiel der Erfindung einen Längsschnitt durch eine Flüssigkeitsreibkupplung 50, deren Ventilanordnung zum wechselseitigen Verschließen und Öffnen von Strömungspfaden 15 und 16 in einer Primärscheibe 1 durch eine Magnetanordnung nach dem Klappankerprinzip betätigt wird. Dabei ist ein Ventilschließelement 11 Bestandteil eines Ventilhebels 10, direkt mit einem Klappanker 12 verbunden und wirkt mit seinen beiden Dichtflächen 13 und 14 wechselseitig auf die Strömungspfade 15 und 16. Der Ventilhebel 10 ist über eine Blattfeder 17 elastisch mit der Primärscheibe 1 verbunden. Die Blattfeder 17 und das Ventilschließelement 11 können dabei einteilig aus einem Federblech gefertigt sein.

Weiterhin umfasst die Flüssigkeitsreibkupplung 50 eine Steuereinheit 40 zum Erzeugen eines auf den Magnetanker 12 einwirkenden Magnetfeldes. Damit das Magnetfeld wirkungsvoll auf den Magnetanker 12 einwirkt, befindet sich der Magnetanker 12 auf der einer Magnetspule 22 zugewandten Seite der Primärscheibe 1. Den inneren Pol des Magneten bildet dabei eine mit der Welle rotierende stählerne Hülse 20. Der äußere Pol des Magneten ist dabei eine in einen Gehäusedeckel eingefügte Stahlhülse 21, wobei diese durch die stählernen Gehäuseelemente 23 der Magnetspule 22, mit denen sie über einen radialen Luftspalt in Verbindung steht, mit einem magnetischen Fluss beaufschlagt. Dabei wird eine kompakte geometrische Anordnung von Magnetanker 12 zu Magnetspule 22 dadurch ermöglicht, dass das zentrale als ein zweireihiges Kegelrollenlager 30 ausgebildete Lagerelement des Kupplungsgehäuses auf der von einem Befestigungsflansch der Kupplung 50 abgewandten Seite, also am frontseitigen Gehäuseteil 31 angeordnet ist. Ein Lüfter 33 kann damit von der Kupplungsfrontseite auf einem frontseitigen Gehäuseteil befestigt werden. Bei einer Fahrzeugendmontage können dann Kupplung 50 und Lüfter 33 nacheinander und unabhängig voneinander am Kraftfahrzeugmotor montiert werden. Andererseits wird ein direkter Kraftfluss von einer Flanschwelle 32 über das Kegelrollenlager 30 und das Gehäuseteil 31 zum Lüfter 33 gewährleistet.

Dabei ist das Kegelrollenlager 30 in O-Anordnung mit einem einstückigen Lageraußenring und zwei Lagerinnenringen ausgebildet. Ferner sind an den axialen Enden des Kegelrollenlagers 30 Dichtmittel zum Abdichten eines die Kegelrollen beinhaltenden Raumes angeordnet.

## Patentansprüche

1. Lagerung einer Flüssigkeitsreibkupplung (50), insbesondere für einen Kraftfahrzeuglüfter (33), umfassend eine drehbar gelagerte Welle (32), einen auf der Welle (32) drehfest gelagerten Antriebskörper, einen auf der Welle (32) drehbar gelagerten, den Antriebskörper zumindest teilweise umschließenden Abtriebskörper und einen zwischen den Körpern angeordneten, ein viskoses Fluid aufnehmenden Kupplungsbereich, durch welchen die Körper zur Übertragung eines Drehmoments koppelbar sind, **dadurch gekennzeichnet, dass** der Abtriebskörper über ein wenigstens zweireihiges Kegelrollenlager (30) drehbar auf der Welle gelagert ist und wobei das Kegelrollenlager (30) für eine Fettschmierung vorgesehen ist, wobei in wenigstem einem axialen Erdbereich des Kegelrollenlagers (30) Dichtmittel zum Abdichten eines die Kegelrollen beinhaltenden Raumes angeordnet sind.

2. Lagerung nach Aspruch 1, **dadurch gekennzeichnet, dass** das Kegelrollenlager (30) in O-Anordnung ausgebildet ist.

3. Lagerung nach einem der Ansprüche 1 oder 2, **dadurch gekennzeichet**, **dass** das Kegelrollenlager (30) mit einem gemeinsamen Lageraußenring für die beiden Kegelrollenreihen ausgebildet ist.

4. Lagerung nach einem der Ansprüche 1 bis 3, **dadurch gekennzeichnet, dass** das Kegelrollenlager (30) mit einem quer zur Achsrichtung zweigeteilte Innenring ausgebildet ist.

5. Lagerung nach einem der Ansprüche 1 bis 4, **dadurch gekennzeichet**, **dass** die Dichtmittel zwischen einem Lageraußenring und Lagerinnenring des Kegelrollenlagers (30) angeordnet sind.

## Claims

1. Storage of a fluid friction coupling (50), in particular for a motor vehicle fan (33), comprising a rotatably mounted shaft (32), a drive body which is supported on the shaft (32) in a rotationally fixed manner, a drive output body which is rotatably supported on the shaft (32) and encloses the drive body at least in parts and a coupling region arranged between the bodies and accepting a viscous fluid through which the bodies can be coupled in order to transmit torque, **characterised in that** the drive output body is rotatably supported on the shaft via at least one two-rowed tapered roller bearing (30) and wherein the tapered roller bearing (30) is provided for a grease lubrication, wherein sealing means for sealing a space containing the tapered rollers is arranged in at least one axial end region of the tapered roller bearing (30).

2. Storage according to claim 1, **characterised in that** the tapered roller bearing (30) is designed in an O-arrangement.

3. Storage according to one of claims 1 or 2, **characterised in that** the tapered roller bearing (30) is designed with a common bearing outer ring for the two rows of tapered rollers.

4. Storage according to one of claims 1 to 3, **characterised in that** the tapered roller bearing (30) is designed with an inner ring which is split in two transversely to the axial direction.

5. Storage according to one of claims 1 to 4, **characterised in that** the sealing means are arranged between a bearing outer ring and a bearing inner ring of the tapered roller bearing (30).

## Revendications

1. Logement d'un accouplement à friction de liquide (50), en particulier pour un ventilateur (33) d'un véhicule automobile, comprenant un arbre (32) monté en rotation, un corps d'entraînement monté en étant solidaire en rotation sur l'arbre (32), un corps mené monté en rotation sur l'arbre (32) et entourant au moins partiellement le corps d'entraînement, et comprenant une zone d'accouplement disposée entre les corps et contenant un fluide visqueux, zone d'accouplement à travers laquelle les corps peuvent être accouplés pour la transmission d'un couple, **caractérisé en ce que** le corps mené est monté en rotation sur l'arbre au moyen d'un roulement (30) à au moins une double rangée de rouleaux coniques, et où le roulement à rouleaux coniques (30) est prévu pour une lubrification à la graisse, où des moyens d'étanchéité sont disposés dans au moins une zone d'extrémité axiale du roulement à rouleaux coniques (30), lesdits moyens d'étanchéité servant à assurer l'étanchéité d'un espace contenant les rouleaux coniques.

2. Logement selon la revendication 1, **caractérisé en ce que** le roulement à rouleaux coniques (30) est configuré suivant un agencement en 0.

3. Logement selon l'une des revendications 1 ou 2, **caractérisé en ce que** le roulement à rouleaux coniques (30) est configuré en ayant une bague extérieure de roulement commune pour les deux rangées de rouleaux coniques.

4. Logement selon l'une quelconque des revendications 1 à 3, **caractérisé en ce que** le roulement à rouleaux coniques (30) est configuré en ayant une bague intérieure divisée en deux de manière transversale par rapport à la direction axiale.

5. Logement selon l'une quelconque des revendications 1 à 4, **caractérisé en ce que** les moyens d'étanchéité sont disposés entre une bague extérieure de roulement et une bague intérieure de roulement du roulement à rouleaux coniques (30).
